# EUROPÄISCHE PATENTANMELDUNG

(11) **EP 1 628 434 A1**
(43) Veröffentlichungstag der Anmeldung: **22.02.2006**
(21) Anmeldenummer: 04019859.0
(22) Anmeldetag: 20.08.2004
(51) Int. Cl.: H04L 12/24

(54) **Schaltungsanordnung und Verfahren zur Visualisierung von Netzwerkinformationen**

(71) Anmelder: SIEMENS AKTIENGESELLSCHAFT, 80333 München (DE)
(72) Erfinder: Engelmann, Uwe, 81369 München (DE)

(57) **Zusammenfassung**

Mit dieser Schaltungsanordnung und dem dazugehörigen Verfahren können Daten zu Objekten innerhalb eines Fensters auf einem Bildschirm ausgelesen, beschrieben, neue Objekte erzeugt und ganze Tabellen auf einmal ausgelesen und graphisch angezeigt und interpretiert werden.

## Beschreibung

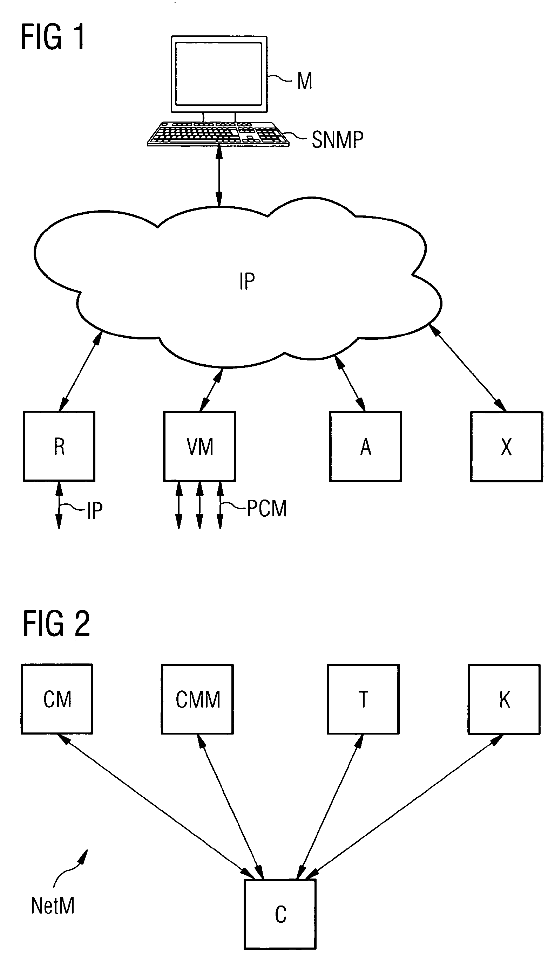

Mit einem Netzwerkmanagementsystem können von einer Managementeinheit M Zustände oder beispielsweise Leistungsmerkmale von Netzelementen erfasst und individuell ausgewertet werden. Die Managementeinheit M kommuniziert mit Hilfe eines standardisierten Managementprotokolls mit den Netzelementen. Dieses Managementprotokoll ist ein Internetprokoll und wird als Simple Network Management Protocol SNMP bezeichnet. Das Internetprotokoll verwendet die transport layer und network layer zum Datentransport. Die mit der Managementeinheit M adressierbaren Netzelementen oder Netzeinheiten können Router R, Voice Modul VM oder Herstellerspezifische Netzelemente A, ..., x sein, siehe Figur 1. Der Betreiber initialisiert über die Managementeinheit M Operationen und empfängt Meldungen von den Netzelementen. Diese Meldungen betreffen die Managed Objects. Ein Managementprozess führt die vom Betreiber angestoßenen Managementoperationen einem ausgewählten Managed Object zu und leitet abgefragte Daten sowie Zustandsdaten oder Meldungen wie zum Beispiel Alarmmeldungen an zugeordnete Prozessmanagementeinheiten weiter.

Die Grundlage der Kommunikation bildet eine Datenbasis, die als Baumstruktur organisiert ist. Die adressierten Managed Objects eines Netzelements werden mittels eines Teilbaums dargestellt. Die Datenbasis ist eine strukturierte Sammlung von solchen Teilbäumen und wird als Management-Information-Base MIB oder Datenbank für Informationen zur Netzverwaltung bezeichnet.

Bisher bekannte MIB-Browser, wie zum Beispiel MG-Soft MIB Browser, erfüllen nicht die Anforderungen eines kompletten Managementsystems, da sie nur einfache Einzelkommandos abschicken können. Vorhandene Managementsysteme, wie z.B. NetM, Access Integrator Element Manager, HP Open View, beispielhaft in Fig. 2 dargestellt, bringen den Nachteil mit sich, dass eine Vielzahl von Fenstern auf einem oder mehreren Bildschirmen geöffnet werden müssen, um Daten zu selektieren. Die gezielt selektierten Daten müssen dann an Eingabeschnittstellen von Subprogrammen eingesetzt werden um weitere Ist-Zustände von Netzeinheiten abzufragen oder Ist-Zustände auf einem Bildschirm zu visualisieren. So zum Beispiel muss ein erstes Fenster geöffnet werden, mit dem Netzelemente in die Datenbasis eingetragen werden, ein zweites Fenster, das die Zustände dieser Netzelemente visualisiert, ein drittes Fenster, das Kommandos abschickt, ein viertes Fenster, das asynchron Nachrichten vom Netzelement empfängt, ein fünftes, um ein Batchfile vom dritten Fenster zu editieren, ein sechstes, um die Software auf den Server zu spielen, die dann mit Hilfe eines siebten Fensters in eine Baugruppe eingespielt wird. Mit dem in Fig. 2 dargestellten Managementsystem NetM können Daten aus Netzelementen abgerufen werden, doch bedarf es dazu eine Vielzahl von Applikationen wie Workbench, Containment View, Log Viewer, Basic Configuration and System Setup und Software Management. Zudem muss noch während den einzelnen Applikationen zwischen einer Vielzahl von Fenstern gewechselt werden.

Aufgabe der Erfindung ist es, ein weiteres Verfahren und eine dazugehörige Schaltungsanordnung eines Management-Information-Base-Browsers anzugeben der die oben genannten Nachteile überwindet.

Die Aufgabe wird durch die Merkmale des Anspruchs 1 oder 6 gelöst.

Die Erfindung bringt den Vorteil mit sich, dass mit den im Trap Receiver Modul und im Containment View Modul hinterlegten MIB-Dateien beliebige Informationen über das Netzwerk und/oder Netzwerkelemente innerhalb eines Fensters visualisierbar sind.

Die Erfindung bringt den Vorteil mit sich, dass bei länderspezifischen oder produktspezifischen Netzwerkänderungen notwendig werdende Anpassungen zentral ohne eine Codeänderung durchgeführt werden können.

Die Erfindung bringt den Vorteil mit sich, dass temporäre Veränderungen bei Netzwerkelementen innerhalb eines Fensters und weiterführende Diagnosen in weiteren Unterfenstern visualisierbar sind.

Die Erfindung bringt den Vorteil mit sich, dass mit dem MIB-Browser Netzwerk-Management Aufgaben übernommen werden können.

Die Erfindung bringt den Vorteil mit sich, dass Netzelementeinformationen innerhalb eines Subfensters abrufbar sind.

Die Erfindung bringt den Vorteil mit sich, dass die Fenstergröße des MIB-Browsers variierbar ist.

Die Erfindung bringt den Vorteil mit sich, dass ein Trap Receiver vorgesehen ist, mit dem ein asynchroner Datenaustausch mit Netzelementen grafisch aufbereitet und übersichtlich nachvollzogen werden kann.

Die Erfindung bringt den Vorteil mit sich, dass das Containment View Modul CV auf die MIB-Dateien zugreifen kann und in Verbindung mit Konfigurationsdaten und Daten von Netzelementen, die über den SNMP-Stack abrufbar und über den Trap Receiver aktualisierbar sind, ohne einen größeren Aufwand übersichtlich visualisierbar sind.

Weitere Besonderheiten der Erfindung werden aus der nachfolgenden näheren Erläuterung zu den Figuren eines Ausführungsbeispiels anhand von schematischen Zeichnungen ersichtlich.

Es zeigen:
- Figur 1: ein Blockschaltbild einer Netztopologie,
- Figur 2: ein Blockschaltbild eines Aufbaus eines Netzwerkmanagements,
- Figur 3: ein Blockschaltbild eines MIB-Browsers und
- Figur 4: ein Zusammenwirken der einzelnen Module eines MIB-Browsers

In Figur 1 ist auszugsweise eine Verbindung eines ManagementSystems M über ein internetprotokollbasiertes Vermittlungsnetz mit verschiedenen Netzelementen R, VM, A, ...,X gezeigt. Diese Netzelemente können Router R, Voice-Module VM oder verschiedene Zugangsmodule zum internetbasiertem Vermittlungsnetz sein. Über ein Telecommunication-Management-Netzwerk IP erfolgt ein standardisierter Datenaustausch. Das Telekommunikation-Management-Network erreicht das Ziel über ein möglicherweise physikalisch vom Nutznetz getrenntes Management-Netz mit eigenen Managementinstanzen und Managementschnittstellen. Das dazu benutzte Datenprotokoll wird Simple Network Management Protocol SNMP genannt.

In Figur 2 ist der Vollständigkeit halber auf die Struktur eines bekannten Netzwerkmanagementsystems NetM verwiesen. Dieses Netzwerkmanagement weist im Wesentlichen ein Configuration Module CM, Containment Module CMM, Trap Modul T, ein Kommando Modul K und ein Core Modul auf. Die dort abgebildete Anordnung weist eine auf das Core Modul C zugeschnittene Systemarchitektur auf.

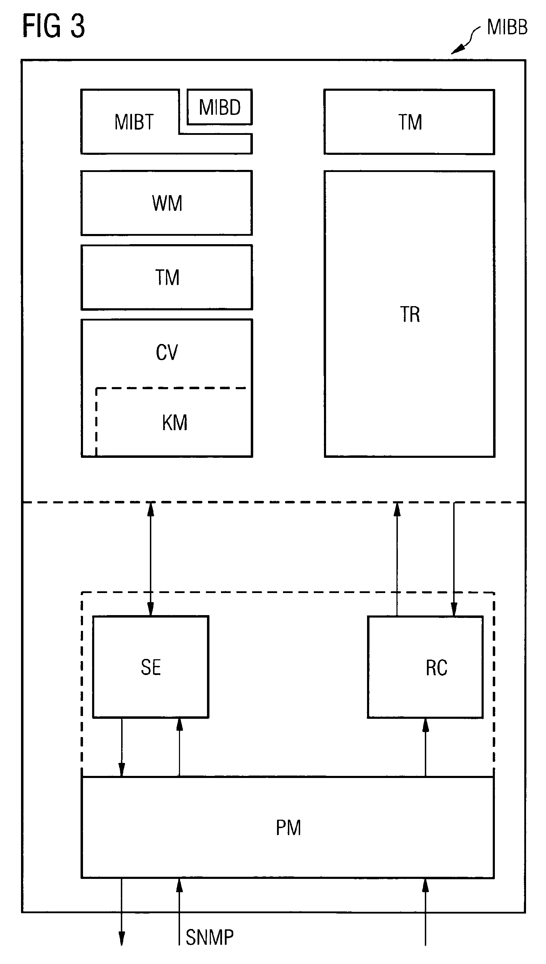

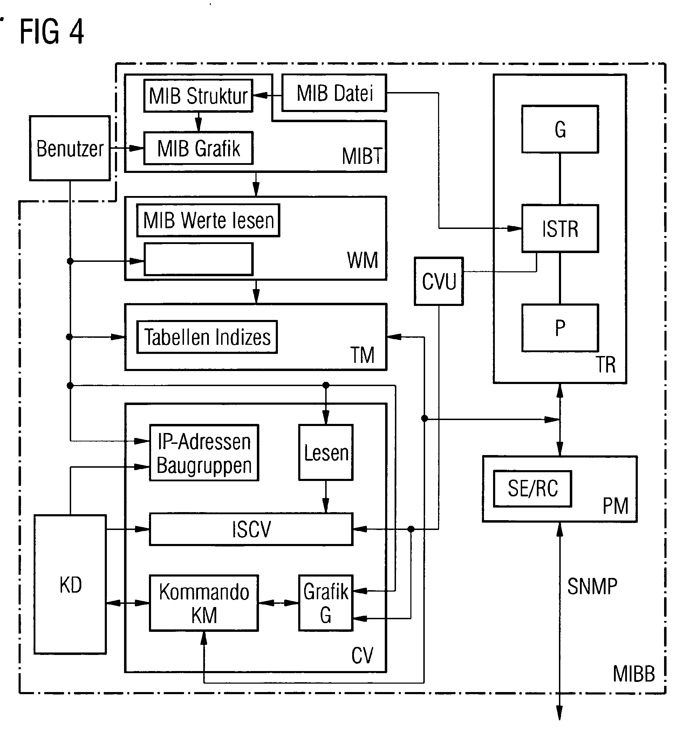

In Figur 3 und 4 ist schematisch der Gegenstand der Erfindung wiedergegeben. In den gezeigten Blockdiagrammen ist ein MIB-Browser MIBB gemäß der Erfindung in Module unterteilt. Die Schnittstelle zum Netz bildet das Protokollmodul PM mit zugehörigen Sende und Empfangsmodulen SE/RC. Das Sende und Empfangsmodul SE/RC kann auch dem Trap Receivermodul TR zugeordnet sein. Dem Management Information Base Browser MIBB sind folgende Module zugeordnet: Ein Trap Receivermodul TR, ein MIB Tree Modul MIBT, ein Wertemodul WM, ein Tabellenmodul TM und ein Containment View Modul CVM sowie ein Konfigurationsmodul KD. Das MIB Tree Modul MIBT, das Trap Receiver Modul TR und das Containment View Modul CV weisen ein Graphikmodul G auf. Dem Trap Receivermodul und dem Containment View Modul ist jeweils eine Management Information Base Datei im Informationsverwaltungsmodul ISTR, ISCV zugeordnet, wobei die Management Information Base Datei ISCV des Containment View Moduls CV über ein am Trap Receiver Modul TR angeordnetes Containment View Update Modul CVU auf den aktuellen Stand einer Netzkonfiguration gehalten wird.

Diese Module sind dazu so ausgeprägt, dass sowohl Objekte wie z.B. Statistiken ausgelesen, beschrieben oder neue Objekte erzeugt und ganze Tabellen auf einmal ausgelesen und graphisch angezeigt werden können. Zudem können über Ziel-IP Adressen gezielt Informationen über ein adressiertes Netzelement abgerufen werden.

Die in Fig. 3, 4 abgebildeten Module haben nachfolgend beschriebene Funktionen und wirken wie in der Fig. 4 abgebildet zusammen. Das Management Information Base Browsers Modul MIBB beinhaltet alle Grafikroutinen und alle dahinter liegenden Funktionen und Strukturen. Diese Funktionen und Strukturen, wie z.B. Baumstrukturen, sind mit dem Grafik Modul G visualisierbar. Die in der Datenbasis MIBD hinterlegten Daten können durch das Management Information Base Browser Graphically Modul beispielsweise in einer Baumstruktur innerhalb eines Fensters auf einem Bildschirm visualisiert werden. Der Benutzer kann beliebig innerhalb der Baumstruktur, z.B. Übertragungsstrecken oder Statistiken selektieren. Weitere Daten werden dem selektierten Netzelement durch das Value und Table Modul WM, TM zugeordnet. Die Datenzuordnung kann dabei benutzergesteuert oder automatisch erfolgen. Die weiteren einem selektierten Knoten durch Objekt und MIB-Element zuzuordnenden Daten können zusätzlich in Subfenstern visualisiert werden. Die durch das Value Modul dem selektierten Netzelement zugeordneten Daten können z.B. der Name des Knotens, der Object Identifier, ein eindeutiger String, die Zugriffsrechte, der Wert des Knotens kann über SNMP gelesen werden, Indizes für den Knoten und Eingabefelder für eine Mehrzahl von Indizes, die zum Lesen der Tabelle notwendig sind.

Das Table Module TM zeigt, wenn der gewählte Knoten eine Tabelle ist, die in der Tabelle enthaltenen Elemente, wie zum Beispiel Name und Typ. Der Benutzer hat die folgenden Möglichkeiten:
- Er kann mit Hilfe der im Wertemodul eingegebenen Indizes eine Instanz der Tabelle lesen. Diese wird im Tabellenmodul angezeigt.
- Er kann alle Instanzen der Tabelle lesen. Diese werden alle im Tabellenmodul angezeigt.
- Er kann mit einer Eingabemaske eine komplett neue Instanz eingeben. Diese wird nach der Eingabe in das Tabellenmodul übernommen.
- Er kann eine vorhandene Instanz editieren. Die geänderten Werte werden in das Tabellenmodul übernommen.

Die erfindungsgemäße Ausprägung des MIB-Browser MIBB ist, dass mittels eines Containment View Moduls CV der Benutzer die Möglichkeit hat, Netzelemente über IP-Adressen anzusprechen. Dabei wird das Containment View Modul CV derart mittels Tabellen definiert die auf einmal von einem oder mehreren Netzelementen benutzerdefinierte Werte anzeigt. Dies bringt den Vorteil mit sich, dass auf einen Blick der Zustand eines oder mehrerer Netzelemente und all ihrer Interfaces und/oder ihrer wichtigsten Funktionen visualisiert werden können. In einer Ausführungsvariante kann mit Hilfe einer Definition einer Alarm-State-Spalte eine Färbung einer ganzen Zeile erreicht werden. So kann, wenn der Alarm State für ein ATM25-Interface den Zustand 1 einnimmt dies bedeuten dass alles in Ordnung ist. Die Zeile wird mit grünem Schriftzug visualisiert. Bei einem fehlerhaften Zustand wird die betreffende Zeile rot markiert. Der Benutzer kann jeweils diese Zeilen selbst definieren. Auch können mehrere Adressen definiert werden, an die die SNMP-Requests geschickt werden. Des Weiteren kann das Containment View Modul CV mit neuen Traps aktualisiert werden, siehe Containment View Update im Modul Trap Receiver TR. So kann beim Lesen des Containment Views eine PCM-Strecke als aktiv angezeigt werden. Bei Ausfall der Gegenstelle oder Ziehen von Steckverbindern schickt beispiels-weise ein Netzelement, z.B. eine Modem Pool Card, einen Trap, der die Strecke alarmiert. Der neue Zustand wird im Containment View Subfenster angezeigt und die betreffende Zeile rot markiert. Da Traps von beliebigen IP-Adressen und für beliebige Indizes, Interfaces, kommen können, muss alles überprüft werden, indem der Inhalt der Traps mit dem Containment-View-Inhalt verglichen wird und bei einer Übereinstimmung mit IP-Adresse und Spaltenname der Wert aktualisiert wird. Der MIB-Browser hat mehrere parallel laufende Programmteile, Threads, d.h. während Traps empfangen werden, kann z.B. der Benutzer MIB-Inhalte lesen oder verändern.

Das Kommandomodul KM ist im Containment View CV integriert. Wenn der Benutzer ein Netzelement, z.B. mittels IP-Adresse, anwählt, dann bekommt er eine Liste der ausführbaren Kommandos angezeigt. Er kann Einzel- und Stapelkommandos senden und bekommt die Resultate zu sehen. Im Falle von Stapelkommandos bekommt er alle Resultate in einem neuen Fenster durch das Graphikmodul G angezeigt und kann sie in eine Textdatei abspeichern. Die Ausführung eines Kommandos kann zu einer Zustandsänderung führen, welche wiederum durch einen Trap signalisiert werden kann. Wenn z.B. das Kommando ein Interface herunterkonfiguriert, dann wird ein Trap eintreffen, der mitteilt, dass das Interface ausgefallen ist. Bei einem länger laufenden Kommando, z.B. ein Software Update, kann ein Trap signalisieren, dass die Abarbeitung gestartet oder zu einem späteren Zeitpunkt mit einem bestimmten Resultat beendet wurde. Diese Traps aktualisieren jeweils den Containment View (wenn diese Objekte dort sichtbar sind).

In einer weiteren Ausgestaltung können in einfacher weise Konfigurationsdaten zentral über das Konfigurationsdaten Modul KD eingegeben werden. Diese Konfigurationsdaten können dabei folgende sein:
- MIB-Knoten der MIB-Struktur MIBS aufgeklappt oder nicht,
- IP-Adressen für Containment View,
- Spaltennamen für Containment View, zu visualisierdene Information von Netzelemente,
- Alarmspalte für Containment View, Definitionen von Alarmzuständen,
- Indizes für Wertemodul,
- Letzte benutzte MIB-Dateien für MIB-Struktur MIBS und Containment View,
- Letzte benutzte MIB-Dateien für Trap Receiver,
- Portnummer für Trap Receiver,
- Timeout und Community String für SNMP-Kommandos,
- Fenstergröße,
- Einzelkommandos für Kommandomodul,
- Stapelkommandos (Batchs) für Kommandomodul.

Das Send/Receive Modul SE/RC hat die Aufgabe, SNMP-Kommandos zu verschicken und die Antworten entgegenzunehmen. Die Kommandos kommen von einer oberen Schicht, und die Antwort wird dorthin zurückgeleitet. Das Modul ist gekapselt, d.h. dass es evtl. ausgetauscht werden kann, wenn ein anderes Protokoll eingesetzt werden sollte.

Ein im Trap Receiver Modul TR angeordnetes Receiver Modul RC ist ein eigener Hintergrundprozess und hat die Aufgabe, auf asynchrone Nachrichten (Traps) zu warten und sie an das Trap Receiver (TR) Module weiterzuleiten. Der UDP-Port, auf den gehört wird, kann im Konfigurationsmodul KD eingestellt werden.

## Patentansprüche

1. Schaltungsanordnung zur Visualisierung von Netzwerkinformationen mit
Modulen (MIBT, WM, TM) zum Darstellen einer Baumstruktur sowie zum Eingeben und Darstellen von Einzelkommandos sowie deren Reaktionen bei Netzelementen und
einem Protokollmodul (PM) zur Abwicklung von Sende- und Empfangsdaten zu und von den Netzelementen,
**dadurch gekennzeichnet,**
**dass** ein Trap Receiver Modul (TR) und ein Containment View Modul (CV) vorgesehen sind, wobei
das Trap Receiver Modul (TR) zum Empfangen und Visualisieren von asynchron eintreffenden Meldungen von den Netzelementen und
das Containment View Modul (CV) zum Versenden von vom Betreiber zu definierenden Kommandofolgen an ausgewählte Netzelemente und zum Anzeigen der verwalteten Netzelemente und deren Betriebszustände ausgebildet ist.

2. Schaltungsanordnung nach Anspruch 1,
**dadurch gekennzeichnet,**
**dass** ein Update Modul (CVU) zwischen dem Trap Receiver Modul (TR) und dem Containment View Modul (CV) vorgesehen ist, wobei die gemeldeten und in einem Informationsverwaltungsmodul (ISTR) des Trap Receiver Moduls (TR) abgelegten Informationen von den Netzelementen durch das Update Modul (CVU) erfasst und in ein Informationsverwaltungsmodul (ISCV) des Containment View Moduls (CV) übernommen und im Graphikmodul (G) des Containment View Moduls (CV) angezeigt werden.

3. Schaltungsanordnung nach Anspruch 1,
**dadurch gekennzeichnet,**
**dass** ein Grafikmodul (G) innerhalb des Trap Receiver Moduls (TR) angeordnet ist, womit die im Informationsverwaltungsmodul (ISTR) des Trap Receiver Moduls (TR) hinterlegten Daten gemeldeter Informationen von den Netzelementen visualisiert werden.

4. Schaltungsanordnung nach Anspruch 1,
**dadurch gekennzeichnet,**
**dass** ein Konfigurations Datei Modul (KD) vorgesehen ist, in dem alle Adressen der Netzelemente, die Art der zu visualisierenden Informationen über die Netzelemente, Definitionen von Alarmzuständen und eine Liste der in einem Kommandomodul (KM) abzuarbeitenden Kommandos hinterlegt werden.

5. Schaltungsanordnung nach Anspruch 4,
**dadurch gekennzeichnet,**
**dass** das Kommandomodul (KM) im Containment View Modul (CV) angeordnet ist, wobei an ausgewählte Netzelemente vordefinierte Kommandofolgen aus dem Konfigurations Datei Modul (KD) entnommen und über das Protokollmodul (PM) an ausgewählte Netzelemente gesendet werden.

6. Verfahren zur Visualisierung von Netzwerkinformationen mit Modulen (MIBT, WM, TM) zum Darstellen einer Baumstruktur sowie zum Eingeben und Darstellen von Einzelkommandos sowie deren Reaktionen bei Netzelementen und einem Protokollmodul (PM) zur Abwicklung von Sende- und Empfangsdaten zu und von den Netzelementen,
**dadurch gekennzeichnet,**
**dass** asynchron eintreffenden Meldungen von den Netzelementen empfangen werden können und
**dass** vom Betreiber zu definierenden Kommandofolgen an ausgewählte Netzelemente versendet und
**dass** verwalteten Netzelemente und deren Betriebszustände visualisiert werden.

7. Verfahren nach Anspruch 6,
**dadurch gekennzeichnet,**
**dass** die gemeldeten und in einem Informationsverwaltungsmodul (ISTR) in einem Trap Receiver Moduls (TR) abgelegten Informationen von den Netzelementen erfasst und in ein Informationsverwaltungsmodul (ISCV) eines Containment View Moduls (CV) übernommen und in einem Graphikmodul (G) des Containment View Moduls (CV) angezeigt werden.

8. Verfahren nach Anspruch 6,
**dadurch gekennzeichnet,**
**dass** die im Informationsverwaltungsmodul (ISTR) des Trap Receiver Moduls (TR) hinterlegten Daten gemeldeter Informationen von den Netzelementen visualisiert werden.

9. Verfahren nach Anspruch 6,
**dadurch gekennzeichnet,**
**dass** die Adressen der Netzelemente, die Art der zu visualisierenden Informationen der Netzelemente, Definitionen von Alarmzuständen und eine Liste der in einem Kommandomodul (KM) abzuarbeitenden Kommandos hinterlegt werden.

10. Verfahren nach Anspruch 9,
**dadurch gekennzeichnet,**
**dass** an ausgewählte Netzelemente vordefinierte Kommandos aus einem Konfigurations Datei Modul (KD) entnommen und über das Protokollmodul (PM) an die Netzelemente gesendet werden.
